# EUROPÄISCHE PATENTSCHRIFT

(11) **EP 4 132 785 B1**
(45) Veröffentlichungstag und Bekanntmachung des Hinweises auf die Patenterteilung: **16.09.2026**
(21) Anmeldenummer: 21713683.7
(22) Anmeldetag: 25.03.2021
(51) Int. Cl.: B32B 17/10, G02B 27/01

(54) **GEFÄRBTE THERMOPLASTISCHE ZWISCHENSCHICHT MIT KEILFÖRMIGEM QUERSCHNITT**
COLOURED THERMOPLASTIC INTERLAYER HAVING WEDGE-SHAPED CROSS SECTION
COUCHE INTERMÉDIAIRE THERMOPLASTIQUE COLORÉE À SECTION TRANSVERSALE EN FORME DE COIN

(30) Priorität: 07.04.2020 EP 20168474
(43) Veröffentlichungstag der Anmeldung: 15.02.2023
(73) Patentinhaber: Saint-Gobain Sekurit France, 60150 Thourotte (FR)
(72) Erfinder: GIER, Stephan, 66359 Bous (DE); WILLMS, Andrea, 52080 Aachen (DE)
(74) Vertreter: Hermanns, Ellen
(86) Internationale Anmeldenummer: PCT/EP2021/057675
(87) Internationale Veröffentlichungsnummer: WO 2021/204550

(56) Entgegenhaltungen:
- EP-A1- 3 466 675
- WO-A1-2019/189741
- US-A1- 2018 117 883

## Beschreibung

Die Erfindung betrifft eine gefärbte thermoplastische Zwischenschicht mit keilförmigem Querschnitt, eine Verbundscheibe aufweisend eine solche Zwischenschicht, ein Verfahren zu ihrer Herstellung und ihre Verwendung.

Verbundscheiben werden heutzutage an vielen Orten, insbesondere im Fahrzeugbau, verwendet. Dabei umfasst der Begriff Fahrzeug unter anderem Straßenfahrzeuge, Flugzeuge, Schiffe, landwirtschaftliche Maschinen oder auch Arbeitsgeräte.

Auch in anderen Bereichen werden Verbundscheiben verwendet. Hierzu zählen beispielsweise Gebäudeverglasungen oder Informationsdisplays, z.B. in Museen oder als Werbedisplays.

Dabei weist eine Verbundscheibe im Allgemeinen zwei Scheiben auf, die auf eine Zwischenschicht laminiert sind. Die Scheiben selbst können eine Krümmung aufweisen und sind in aller Regel von konstanter Dicke. Die Zwischenschicht weist in aller Regel ein thermoplastisches Material, vorzugsweise Polyvinylbutyral (PVB), einer vorbestimmten Dicke, z.B. 0,76 mm, auf.

Da die Verbundscheiben häufig in Bezug auf einen Betrachter geneigt sind, kommt es zu Doppelbildern. Diese Doppelbilder sind dadurch bedingt, dass einfallendes Licht in aller Regel nicht vollständig durch beide Scheiben tritt, sondern dass zumindest ein Teil des Lichtes reflektiert wird und erst danach durch die zweite Scheibe tritt. Diese Doppelbilder sind insbesondere bei Dunkelheit wahrnehmbar, vor allem bei stark einstrahlenden Lichtquellen, wie z.B. die Scheinwerfer eines entgegenkommenden Fahrzeugs. Diese Doppelbilder sind extrem störend und ein Sicherheitsproblem.

Häufig werden Verbundscheiben auch als Head-Up-Display (HUD) zur Anzeige von Informationen verwendet. Dabei wird mittels einer Projektionsvorrichtung ein Bild auf die Verbundglasscheiben projiziert, um dem Betrachter eine Information ins Sichtfeld einzublenden. Im Fahrzeugbereich wird die Projektionseinrichtung z.B. auf dem Armaturenbrett angeordnet, so dass das projizierte Bild auf der nächstliegenden Glasfläche der zum Betrachter hin geneigten Verbundglasscheibe in Richtung des Betrachters reflektiert wird (vgl. z.B. EP 0 420 228 B1 oder DE 10 2012 211 729 A1). Hier tritt wiederum ein Teil des Lichts in die Verbundglasscheiben ein und wird nun z.B. an der äußeren Grenzschicht der vom Betrachter aus gesehen weiter außen liegenden Glasfläche reflektiert und tritt anschließend versetzt aus der Verbundglasscheibe aus. Auch hier tritt ein ähnlicher Effekt, der Effekt der Geisterbilder, in Bezug auf das darzustellende Bild auf.

Eine reine klassische Kompensation von Geisterbildern führt dazu, dass eine Überkompensation für Doppelbilder in Transmission zu beobachten ist. Dies führt dazu, dass der jeweilige Betrachter irritiert wird oder im schlimmsten Fall eine Fehlinformation erhält. Dieses Problem kann gelöst werden indem die Oberflächen der Scheiben nicht mehr parallel, sondern in einem festen Winkel angeordnet werden. Dies wird zum Beispiel dadurch erreicht, dass die Zwischenschicht und/oder mindestens eine der Scheiben keilförmig mit kontinuierlich linear und/oder nichtlinear ansteigender und/oder abnehmender Dicke ist. Im Fahrzeugbau wird typischerweise die Dicke so variiert, dass am unteren Ende der Verbundglasscheibe hin zum Motorraum die kleinste Dicke vorgesehen ist, während die Dicke zum Dach hin ansteigt. Somit steigt die Dicke der Zwischenschicht mit keilförmigen Querschnitt vom unteren Ende der Zwischenschicht zum oberen Ende der Zwischenschicht an.

Verbundscheiben dieser Art mit keilförmiger Zwischenschicht und die optischen Gesetze, auf denen sie beruhen, sind an sich bekannt und werden beispielsweise in den internationalen Patentanmeldungen WO 2015/086234 A1 und WO 2015/086233 A1 oder den deutschen Offenlegungsschriften DE 196 11 483 A1 und DE 195 35 053 A1 beschrieben.

In modernen Transportmitteln wie Zügen oder Kraftfahrzeugen gewinnt der akustische Komfort an Bedeutung. Zur Verbesserung der akustisch dämpfenden Eigenschaften einer Verbundscheibe, wird üblicherweise zwischen den beiden Scheiben der Verbundscheibe eine mehrlagige Zwischenschicht umfassend eine zwischen zwei Schichten angeordnete akustisch dämpfende Schicht einlaminiert.

Die WO 2018/081570 A1, die US 2016/0341960 A1 und die EP 2 017 237 A1 offenbaren keilförmige mehrlagige Zwischenschichten, die eine Schicht konstanter Dicke und eine Schicht mit einem keilförmigen Querschnitt umfassen, wobei die Schicht konstanter Dicke eine zwischen zwei Schutzschichten angeordnete akustisch dämpfende Schicht umfasst.

In der EP 3 466 675 A1 ist eine Verbundscheibe mit einer Zwischenschicht mit einem keilförmigen Querschnitt offenbart, wobei die Zwischenschicht Pigmente als Infrarotstrahlung absorbierenden Stoffe enthält.

US 2018/117883 A1 offenbart eine keilförmige mehrlagige Zwischenschicht, die eine Schicht konstanter Dicke und eine Schicht mit einem keilförmigen Querschnitt umfasst, wobei die Schicht konstanter Dicke eine zwischen zwei Schutzschichten angeordnete akustisch dämpfende Schicht umfasst und wobei die einzelnen Schichten der keilförmigen mehrlagigen Zwischenschicht Pigmente aufweisen können.

In WO 2019/189741 A1 ist eine keilförmige mehrlagige Zwischenschicht offenbart, welche eine infrarotreflektierende Schicht, eine erste Harzschicht und eine zweite Harzschicht umfasst, wobei die erste Harzschicht auf einer ersten Oberflächenseite der infrarotreflektierenden Schicht angeordnet ist, die zweite Harzschicht auf einer zweiten Oberflächenseite angeordnet ist, die der ersten Oberfläche der infrarotreflektierenden Schicht gegenüberliegt, und wobei mindestens eine der ersten Harzschicht und der zweiten Harzschicht einen Keilwinkel von 0,1 mrad oder mehr aufweist, und mindestens eine der ersten Harzschicht und der zweiten Harzschicht ein Färbemittel enthält.

Bei gefärbten Zwischenschichten mit einem keilförmigen Querschnitt, bei denen die Farbstoffkonzentration in der Zwischenschicht über deren Breite, Höhe und Dicke konstant ist, besteht das Problem, dass die Lichttransmission durch die Zwischenschicht aufgrund des keilförmigen Querschnitts unter der damit verbundenen nicht konstanten Dicke nicht über deren Fläche, das heißt nicht über die gesamte Höhe und die gesamte Breite, konstant ist. So ist die Lichttransmission durch die Zwischenschicht am dünneren Ende der Zwischenschicht höher und die Farbe heller als am dickeren Ende der Zwischenschicht. Mit steigender Dicke wird die Lichttransmission durch die Zwischenschicht geringer und die Farbe dunkler.

Der vorliegenden Erfindung liegt die Aufgabe zugrunde, eine gefärbte thermoplastische Zwischenschicht bereitzustellen, die einen keilförmigen Querschnitt aufweist und bei der die Lichttransmission über die gesamte Breite und Höhe der Zwischenschicht konstant ist, die Farbe über die gesamte Höhe und Breite im Wesentlichen konstant ist und/oder welche einfach herzustellen ist.

Die Aufgabe der vorliegenden Erfindung wird erfindungsgemäß durch eine gefärbte thermoplastische Zwischenschicht gemäß Anspruch 1 und ein Verfahren gemäß Anspruch 13 gelöst. Die Erfindung betrifft auch eine Verbundscheibe, eine Projektionsanordnung und die Verwendung der gefärbten thermoplastischen Zwischenschicht gemäß der nebengeordneten Ansprüche. Bevorzugte Ausführungen gehen aus den Unteransprüchen hervor.

Die Erfindung betrifft eine gefärbte thermoplastische Zwischenschicht mit einer Breite, einer Höhe und einem keilförmigen Querschnitt mit einem dickeren ersten Ende und einem dünneren zweiten Ende, mindestens umfassend eine erste gefärbte thermoplastische Schicht mit einer Breite, einer Höhe und einem keilförmigen Querschnitt mit einem dickeren ersten Ende und einem dünneren zweiten Ende. Der Dickenanstieg von dem zweiten Ende zum ersten Ende kann dabei kontinuierlich linear oder nicht linear sein.

Erfindungsgemäß entspricht die Breite und Höhe der gefärbten thermoplastischen Zwischenschicht der Breite und Höhe der ersten gefärbten thermoplastischen Schicht.

Die Fläche, welche von der ersten gefärbten thermoplastischen Schicht eingenommen wird, entspricht somit der Fläche der gefärbten thermoplastischen Zwischenschicht. Somit ist die erste gefärbte thermoplastische Schicht nicht nur in einem Teilbereich der gefärbten thermoplastischen Zwischenschicht angeordnet, sondern vollflächig. Umfasst die gefärbte thermoplastische Zwischenschicht nur die erste gefärbte thermoplastische Schicht, so entspricht folglich auch das Dickenprofil der gefärbten thermoplastischen Zwischenschicht dem Dickenprofil der ersten gefärbten thermoplastischen Schicht. Umfasst die gefärbte thermoplastische Zwischenschicht neben der ersten gefärbten thermoplastischen Schicht noch weitere Schichten, wie eine akustisch dämpfende Schicht mit im Wesentlichen konstanter Dicke und einer Breite und einer Höhe sowie eine zweite gefärbte thermoplastische Schicht mit einer Breite, einer Höhe und einem keilförmigen Querschnitt mit einem dickeren ersten Ende und einem dünneren zweiten Ende, so setzt sich das Dickenprofil der gefärbten thermoplastischen Zwischenschicht aus den Dickenprofilen der ersten gefärbten thermoplastischen Schicht, der akustisch dämpfenden Schicht und der zweiten gefärbten thermoplastischen Schicht zusammen. Die Dicke der gefärbten thermoplastischen Zwischenschicht an einem Punkt entspricht folglich in diesen Ausführungsformen der Summe der Dicken der ersten gefärbten thermoplastischen Schicht, der akustisch dämpfenden Schicht und der zweiten gefärbten thermoplastischen Schicht an diesem Punkt.

Die erste gefärbte thermoplastische Schicht weist einen Farbstoff auf. Bei dem Farbstoff kann es sich beispielsweise um eine Tinte oder ein Farbpigment handeln. Vorteil insbesondere organischer Tinten gegenüber insbesondere anorganischen Pigmenten ist deren einfachere Verteilbarkeit. Jedoch sind organische Tinten nicht so stabil wie anorganische Pigmente und altern schneller. Anorganische Pigmente agglomerieren allerdings ehr als organische Tinten. Dem Fachmann sind für den jeweiligen Anwendungsfall geeignete Tinten oder Farbpigmente bekannt, so dass darauf im Folgenden nicht näher eingegangen wird.

Erfindungsgemäß ist die Lichttransmission durch die erste gefärbte thermoplastische Schicht über deren gesamte Breite und deren gesamte Höhe konstant. Folglich ist die auch Lichttransmission durch die gefärbte thermoplastische Zwischenschicht über die gesamte Breite und die gesamte Höhe, das heißt über deren gesamte Fläche, konstant.

Die konstante Lichttransmission über die gesamte Breite und die gesamte Höhe trotz eines keilförmigen Querschnitts wird erzielt, indem die Farbstoffkonzentration in der ersten gefärbten thermoplastischen Schicht von dem dickeren ersten Ende der ersten gefärbten thermoplastischen Schicht zu deren dünneren zweiten Ende zunimmt.

Das Verhältnis der Farbstoffkonzentrationen an Positionen in der Schicht mit unterschiedlicher Dicke, welches benötigt wird, um eine konstante Lichttransmission an beiden Positionen zu erzielen, lässt sich bevorzugt wie folgt berechnen: $\frac{{c}_{1}}{{c}_{2}} = \left(1-\frac{Δ x}{{t}_{1}}⋅tanα\right) ⋅ \frac{{ε}_{2}}{{ε}_{1}}$

Mit:
t₁: Dicke an Position 1
t₂: Dicke an Position 2
c₁: Konzentration an Position 1
c₂: Konzentration an Position 2
ε₁: Extinktionskoeffizient an Position 1
ε₂: Extinktionskoeffizient an Position 2
α: Keilwinkel
Δx: Abstand zwischen Position 1 und Position 2

Die gefärbte thermoplastische Zwischenschicht kann einen Keilwinkel im Bereich von 0,1 mrad bis 1,0 mrad, bevorzugt 0,3 mrad bis 0,6 mrad, beispielsweise 0,5 mrad aufweisen.

Die Dicke der gefärbten thermoplastischen Zwischenschicht ist an deren dünneren zweiten Ende bevorzugt zwischen 0,3 mm und 1,0 mm, besonders bevorzugt zwischen 0,6 mm und 0,9 mm, beispielsweise 0,76 mm.

Die Dicke der ersten gefärbten thermoplastischen Schicht ist an deren dünneren zweiten Ende bevorzugt zwischen 0,3 mm und 1,0 mm, besonders bevorzugt zwischen 0,3 mm und 0,9 mm, beispielsweise 0,38 mm oder 0,76 mm, mit der Maßgabe, dass die Dicke am dünneren zweiten Ende geringer ist als die Dicke am dickeren ersten Ende.

In einer bevorzugten Ausführungsform enthält die erste gefärbte thermoplastische Schicht einen Farbstoff und zumindest Polyvinylbutyral (PVB), Ethylenvinylacetat (EVA), Polyurethan (PU) oder Gemische oder Copolymere oder Derivate davon. Besonders bevorzugt enthält die erste gefärbte thermoplastische Schicht einen Farbstoff und bevorzugt Polyvinylbutyral (PVB), ganz besonders bevorzugt einen Farbstoff, Polyvinylbutyral (PVB) und Weichmacher.

In einer besonders bevorzugten Ausführungsform der erfindungsgemäßen mehrlagigen thermoplastischen Zwischenschicht ist die Farbe der mehrlagigen gefärbten thermoplastischen Zwischenschicht über deren gesamte Fläche, d.h. über deren gesamte Breite und über deren gesamte Höhe, im Wesentlichen konstant.

Farbdifferenzen werden beim CIELab-Farbmodell üblicherweise als Euklidischer Abstand der L*a*b*-Werte zweier an verschiedenen Messpunkten gemessenen Farben berechnet.

Eine im Wesentlichen konstante Farbe bedeutet im Rahmen dieser Anmeldung, dass der Farbabstand gemäß Anforderung der Automobilbranche, d.h. der die Sensitivität des Auges berücksichtigende euklidische Abstand kleiner als 0,5, bevorzugt kleiner als 0,2 ist. $Δ E ′ = \sqrt{{\left(\frac{Δ L *}{2}\right)}^{2} + {\left(Δa*\right)}^{2} + {\left(Δb*\right)}^{2}}$ mit $ΔL * = {L}_{1} * - {L}_{2} *$ $Δa * = {a}_{1} * - {a}_{2} *$ $Δb * = {b}_{1} * - {b}_{2} *$
L₁* = Luminanz an einer ersten Stelle
L₂* = Luminanz an einer zweiten Stelle
a₁* = Wert für den Grün- oder Rotanteil einer Farbe an einer ersten Stelle
a₂* = Wert für den Grün- oder Rotanteil einer Farbe an einer zweiten Stelle
b₁* = Wert für den Blau- oder Gelbanteil einer Farbe an einer ersten Stelle
b₂* = Wert für den Blau- oder Gelbanteil einer Farbe an einer zweiten Stelle
ΔE' = die Sensitivität des Auges berücksichtigender euklidischer Abstand der L*a*b*-Werte zweier Farben

Beispielsweise können L* = 85, a* = -0,5 und b* = -0,5 sein.

Die gefärbte thermoplastische Zwischenschicht kann optional zusätzlich ein farbiges Band unterschiedlicher Farbintensität, ein sogenanntes shaded band wie beispielsweise in der US 4,562,023 beschrieben, aufweisen. Es versteht sich, dass im Bereich eines solchen zusätzlichen farbigen Bandes die Lichttransmission und die Farbe nicht die gleiche wie im Rest der gefärbten mehrlagigen Zwischenschicht ist.

Die gefärbte thermoplastische Zwischenschicht kann durch eine einzelne Schicht ausgebildet sein oder auch durch mehr als eine Schicht.

In der Ausführungsform, in der die gefärbte thermoplastische Zwischenschicht durch eine einzelne Schicht ausgebildet ist, umfasst die gefärbte thermoplastische Zwischenschicht eine erste gefärbte thermoplastische Schicht mit einer Breite, einer Höhe und einem keilförmigen Querschnitt mit einem dickeren ersten Ende und einem dünneren zweiten Ende, wobei die Breite und die Höhe der gefärbten thermoplastischen Zwischenschicht der Breite und der Höhe der ersten gefärbten thermoplastischen Schicht entspricht,
die erste gefärbte thermoplastische Schicht einen Farbstoff aufweist,
die Farbstoffkonzentration in der ersten gefärbten thermoplastischen Schicht von deren dickeren ersten Ende zu deren dünneren zweiten Ende zunimmt,
die Lichttransmission durch die erste gefärbte thermoplastische Schicht über deren gesamte Breite und deren gesamte Höhe konstant ist, und
die Lichttransmission durch die gefärbte thermoplastische Zwischenschicht über deren gesamte Breite und deren gesamte Höhe konstant ist.

Es versteht sich, dass in der Ausführungsform, in der die gefärbte thermoplastische Zwischenschicht nur durch eine erste gefärbte thermoplastische Schicht ausgebildet ist, das Dickenprofil der gefärbten thermoplastischen Zwischenschicht dem Dickenprofil der ersten gefärbten thermoplastischen Schicht entspricht.

In einer Ausführungsform ist die gefärbte thermoplastische Zwischenschicht eine funktionale Zwischenschicht mit akustisch dämpfenden Eigenschaften. Eine solche Zwischenschicht besteht typischerweise aus mindestens drei Lagen, wobei die mittlere Lage eine geringere Steifigkeit aufweist als die sie umgebenden äußeren Lagen, beispielsweise infolge eines höheren Anteils an Weichmachern.

In der Ausführungsform als funktionale Zwischenschicht mit akustisch dämpfenden Eigenschaften umfasst die gefärbte thermoplastische Zwischenschicht neben einer ersten gefärbten thermoplastischen Schicht zusätzlich noch eine akustisch dämpfende Schicht mit im Wesentlichen konstanter Dicke und einer Breite und einer Höhe sowie eine zweite gefärbte thermoplastische Schicht mit einer Breite, einer Höhe und einem keilförmigen Querschnitt mit einem dickeren ersten Ende und einem dünneren zweiten Ende.

Unter einer im Wesentlichen konstanten Dicke einer Schicht ist in der vorliegenden Anmeldung zu verstehen, dass die Dicke der Schicht über die Breite und Höhe im Rahmen normaler Fertigungstoleranzen konstant ist. Bevorzugt bedeutet dies, dass die Dicke um nicht mehr als 3 %, bevorzugt um nicht mehr als 2 %, besonders bevorzugt um nicht mehr als 1 % variiert.

Die Breite und die Höhe der akustisch dämpfenden Schicht und die Breite und die Höhe der zweiten gefärbten thermoplastischen Schicht entsprechen der Breite und der Höhe der gefärbten thermoplastischen Zwischenschicht und der Breite und der Höhe der ersten gefärbten thermoplastischen Schicht. Die akustisch dämpfende Schicht ist zwischen der ersten gefärbten thermoplastischen Schicht und der zweiten gefärbten thermoplastischen Schicht angeordnet. Die drei Schichten, d.h. die erste gefärbte thermoplastische Schicht, die akustisch dämpfende Schicht und die zweite gefärbte thermoplastische Schicht, sind in der genannten Reihenfolge flächig übereinander angeordnet. Die erste gefärbte thermoplastische Schicht weist einen Farbstoff auf, wobei die Farbstoffkonzentration von dem dickeren ersten Ende der ersten gefärbten thermoplastischen Schicht zu deren dünneren Ende zunimmt. Die Lichttransmission durch die erste gefärbte thermoplastische Schicht ist über deren gesamte Breite und deren gesamte Höhe konstant. Die zweite gefärbte thermoplastische Schicht weist einen Farbstoff auf, wobei die Farbstoffkonzentration von dem dickeren ersten Ende der zweiten gefärbten thermoplastischen Schicht zu deren dünneren Ende zunimmt. Die Lichttransmission durch die zweite gefärbte thermoplastische Schicht ist über deren gesamte Breite und deren gesamte Höhe konstant. Folglich ist die auch Lichttransmission durch die gefärbte thermoplastische Zwischenschicht über die gesamte Breite und die gesamte Höhe, das heißt über deren gesamte Fläche, konstant.

Das Verhältnis der Farbstoffkonzentrationen an Positionen in der Schicht mit unterschiedlicher Dicke, das benötigt wird, um eine konstante Lichttransmission an beiden Positionen zu erzielen, lässt sich für die erste gefärbte thermoplastische Schicht und die zweite gefärbte thermoplastische Schicht bevorzugt wie oben angegeben berechnen.

Es versteht sich, dass in der Ausführungsform als funktionale Zwischenschicht mit akustisch dämpfenden Eigenschaften, das Dickenprofil der gefärbten thermoplastischen Zwischenschicht der Summe aus den Dickenprofilen der ersten gefärbten thermoplastischen Schicht, der akustisch dämpfenden Schicht und der zweiten gefärbten thermoplastischen Schicht entspricht.

In einer Ausführungsform ist die akustisch dämpfende Schicht farblos. In einer alternativen Ausführungsform ist die akustisch dämpfende Schicht mit einem Farbstoff gefärbt.

Wie oben beschrieben kann es sich bei dem Farbstoff um eine Tinte oder um Farbpigmente handeln.

Bevorzugt weisen die erste gefärbte thermoplastische Schicht und die zweite gefärbte thermoplastische Schicht und sofern die akustische dämpfende Schicht gefärbt ist, auch diese die gleiche Farbe auf. Es ist aber auch möglich, dass die erste gefärbte thermoplastische Schicht und die zweite gefärbte thermoplastische Schicht unterschiedliche Farben aufweisen und sich somit die Farbe der erfindungsgemäßen thermoplastischen Zwischenschicht in diesen Ausführungsformen aus den Farben der beiden Schichten oder im Falle einer gefärbten akustisch dämpfenden Schicht aus den Farben der drei Schichten zusammensetzt.

In einer bevorzugten Ausführungsform enthält die zweite gefärbte thermoplastische Schicht einen Farbstoff und zumindest Polyvinylbutyral (PVB), Ethylenvinylacetat (EVA), Polyurethan (PU) oder Gemische oder Copolymere oder Derivate davon. Besonders bevorzugt enthält die zweite gefärbte thermoplastische Schicht einen Farbstoff und bevorzugt Polyvinylbutyral (PVB), ganz besonders bevorzugt einen Farbstoff, Polyvinylbutyral (PVB) und Weichmacher.

Die Dicke der zweiten gefärbten thermoplastischen Schicht ist an deren dünneren zweiten Ende bevorzugt zwischen 0,3 mm und 1,0 mm, besonders bevorzugt zwischen 0,3 mm und 0,9 mm, beispielsweise 0,38 mm oder 0,76 mm, mit der Maßgabe, dass die Dicke am dünneren zweiten Ende geringer ist als die Dicke am dickeren ersten Ende.

Die akustisch dämpfende Schicht ist bevorzugt dünner als 300 µm (Mikrometer). Die Dicke der akustisch dämpfenden Schicht beträgt insbesondere 70 µm bis 130 µm, beispielsweise 100 µm.

Die akustisch dämpfende Schicht kann zumindest Polyvinylbutyral (PVB), Ethylenvinylacetat (EVA), Polyurethan (PU), Acrylate oder Gemische oder Copolymere oder Derivate davon und Weichmacher, bevorzugt Polyvinylbutyral (PVB) und Weichmacher, enthalten. In den Ausführungsformen, in denen die akustisch dämpfende Schicht mit einem Farbstoff gefärbt ist, enthält die akustisch dämpfende Schicht zusätzlich noch einen Farbstoff.

Die zweite gefärbte thermoplastische Schicht weist bevorzugt einen Keilwinkel im Bereich von 0,05 mrad bis 0,5 mrad, besonders bevorzugt 0,15 mrad bis 0,3 mrad, beispielsweise 0,25 mrad auf.

Es versteht sich, dass in den Ausführungsformen, in denen die gefärbte thermoplastische Zwischenschicht eine erste gefärbte thermoplastische Schicht mit keilförmigem Querschnitt und eine zweite gefärbte thermoplastische Schicht mit keilförmigem Querschnitt aufweist, die Schichten mit keilförmigem Querschnitt derart angeordnet sind, dass jeweils die dünneren Enden übereinander liegen und jeweils die dickeren Enden übereinander liegen, d.h. das Dickenanstieg der beiden Schichten in gleicher Richtung verläuft.

Die Erfindung betrifft auch eine Verbundscheibe, umfassend eine Außenscheibe und eine Innenscheibe, die über eine erfindungsgemäße gefärbte thermoplastische Zwischenschicht miteinander verbunden sind.

Die erfindungsgemäße gefärbte thermoplastische Zwischenschicht weist wie oben beschrieben einen keilförmigen Querschnitt auf und kann wie in den oben beschriebenen verschiedenen Ausführungsformen ausgebildet sein.

Die erfindungsgemäße Verbundscheibe weist eine Oberkante und eine Unterkante auf. Mit Oberkante wird die diejenige Seitenkante der Verbundscheibe bezeichnet, welche dafür vorgesehen ist, in Einbaulage nach oben zu weisen. Mit Unterkante wird diejenige Seitenkante bezeichnet, welche dafür vorgesehen ist, in Einbaulage nach unten zu weisen. Ist die Verbundscheibe die Windschutzscheibe eines Kraftfahrzeugs, so wird die Oberkante häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die erfindungsgemäße gefärbte thermoplastische Zwischenschicht miteinander verbunden.

Mit Innenscheibe wird bei einer Fahrzeugscheibe diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein.

Die Außenscheibe und die Innenscheibe weisen einen im wesentlichen konstanten Querschnitt auf.

Es ist aber auch möglich, dass die Außenscheibe und/oder die Innenscheibe einen keilförmigen Querschnitt aufweisen. Der Keilwinkel einer solchen Scheibe mit keilförmigen Querschnitt beträgt bevorzugt 0,05 mrad bis 0,5 mrad, besonders bevorzugt 0,15 mrad bis 0,3 mrad, beispielsweise 0,25 mrad.

Unter einem im Wesentlichen konstanten Querschnitt einer Scheibe ist in der vorliegenden Anmeldung zu verstehen, dass die Dicke der Scheibe über die Höhe und Breite im Rahmen normaler Fertigungstoleranzen konstant ist. Bevorzugt bedeutet dies, dass die Dicke um nicht mehr als 7 %, bevorzugt um nicht mehr als 5 %, besonders bevorzugt um nicht mehr als 3 % variiert.

Da die erfindungsgemäße Verbundscheibe eine erfindungsgemäße mehrlagige gefärbte thermoplastische Zwischenschicht mit einem keilförmigen Querschnitt und zwei Scheiben mit im Wesentlichen konstanter Dicke oder mit einem keilförmigen Querschnitt umfasst, weist die erfindungsgemäße Verbundscheibe einen keilförmigen Querschnitt auf.

Es versteht sich, dass mit Querschnitt der Querschnitt im vertikalen Verlauf zwischen der Unterkante und der Oberkante gemeint ist. Bei den erfindungsgemäßen Verbundscheiben nimmt die Dicke von der Unterkante zur Oberkante zu. Das dickere erste Ende befindet sich somit an der Oberkante und das dünnere zweite Ende an der Unterkante der Verbundscheibe. Dies gilt gleichermaßen für die erfindungsgemäße gefärbte thermoplastische Zwischenschicht mit einem keilförmigen Querschnitt und die keilförmige Schicht oder keilförmigen Schichten, welche die erfindungsgemäße gefärbte thermoplastische Zwischenschicht wie oben in den verschiedenen Ausführungsformen beschrieben aufweist.

Im Fahrzeugbau wird typischerweise die Dicke so variiert, dass am unteren Ende der Verbundglasscheibe hin zum Motorraum die kleinste Dicke vorgesehen ist, während die Dicke zum Dach hin ansteigt.

Der Keilwinkel der erfindungsgemäßen Verbundscheibe beträgt bevorzugt 0,1 mrad bis 1,0 mrad, besonders bevorzugt 0,3 mrad bis 0,6 mrad, beispielsweise 0,5 mrad.

Die erfindungsgemäße Verbundscheibe kann eine oder mehrere zusätzliche Zwischenschichten, insbesondere funktionale Zwischenschichten, umfassen, wobei diese zusätzlichen Zwischenschichten von im Wesentlichen konstanter Dicke sind. D.h. die eine oder die mehreren zusätzlichen Zwischenschichten weisen keinen Keilwinkel auf.

Diese mindestens eine zusätzliche Zwischenschicht ist zwischen der Außenscheibe und der gefärbten thermoplastischen Zwischenschicht oder zwischen der Innenscheibe und der gefärbten thermoplastischen Zwischenschicht angeordnet. Weist die erfindungsgemäße Verbundscheibe zwei oder mehr zusätzliche Zwischenschichten auf, so ist es auch möglich, dass mindestens eine der zusätzlichen Zwischenschichten zwischen der Außenscheibe und der gefärbten thermoplastischen Zwischenschicht angeordnet und mindestens eine der zusätzlichen Zwischenschicht zwischen der Innenscheibe und der gefärbten thermoplastischen Zwischenschicht angeordnet ist.

Bei einer zusätzlichen Zwischenschicht kann es sich insbesondere um eine Zwischenschicht, eine Infrarotstrahlung absorbierende Schicht, eine Infrarotstrahlung reflektierende Schicht, eine ultraviolette Strahlung absorbierende Schicht, eine Barriereschicht oder eine Kombination dieser handeln. Beim Vorhandensein mehrerer zusätzlicher Zwischenschichten können diese auch unterschiedliche Funktionen aufweisen.

Die zusätzliche Zwischenschicht kann auch als eine funktionale Zwischenschicht mit akustisch dämpfenden Eigenschaften ausgebildet sein. Es versteht sich, dass die zusätzliche Zwischenschicht bevorzugt dann als funktionale Zwischenschicht mit akustisch dämpfenden Eigenschaften ausgebildet ist, wenn die erfindungsgemäße gefärbte thermoplastische Zwischenschicht nicht bereits als eine funktionale Zwischenschicht mit akustisch dämpfenden Eigenschaften ausgebildet ist.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat.

Die Außenscheibe und/oder die Innenscheibe können Antireflexbeschichtungen, Antihaftbeschichtungen, Antikratzbeschichtungen, photokatalytische Beschichtungen, elektrisch heizbare Beschichtungen, Sonnenschutzbeschichtungen und/oder Low-E-Beschichtungen aufweisen.

Die Dicke der Außenscheibe und der Innenscheibe kann breit variieren und so den Erfordernissen im Einzelfall angepasst werden. Die Außenscheibe und die Innenscheibe weisen bevorzugt Dicken von 1 mm bis 5 mm auf, besonders bevorzugt von 1 mm bis 3 mm. Beispielsweise ist die Außenscheibe 2,1 mm dick und die Innenscheibe 1,6 mm dick. Es kann sich bei der Außenscheibe oder insbesondere der Innenscheibe aber auch um Dünnglas mit einer Dicke von beispielsweise 0,55 mm handeln.

Die Dicke der erfindungsgemäßen gefärbten thermoplastischen Zwischenschicht ist beispielsweise 0,76 mm bis 0,84 mm an dem dickeren ersten Ende und beispielsweise mindestens 0,55 mm, bevorzugt mindestens 0,65 mm, an dem dünneren zweiten Ende, mit der Maßgabe, dass die Dicke am dünneren zweiten Ende geringer ist als die Dicke am dickeren ersten Ende.

Wie oben beschrieben können die Außenscheibe und/oder die Innenscheibe auch einen keilförmigen Querschnitt aufweisen. In diesem Fall beträgt die Dicke bevorzugt 1 mm bis 5 mm am dünneren Ende.

Die Höhe der Außenscheibe und der Innenscheibe, d.h. im Falle einer Windschutzscheibe der Abstand zwischen der Dachkante der Verbundscheibe und der Motorkante der Verbundscheibe beträgt bevorzugt zwischen 0,8 m und 1,40 m, besonders bevorzugt zwischen 0,9 m und 1,25 m, beispielsweise 1,0 m. Es versteht sich, dass somit auch die Höhe der erfindungsgemäßen gefärbten thermoplastischen Zwischenschicht und der optionalen zusätzlichen Zwischenschichten bevorzugt zwischen 0,8 m und 1,40 m, besonders bevorzugt zwischen 0,9 m und 1,25 m, beispielsweise 1,0 m beträgt.

Somit ist im Sinne der Erfindung unter der Höhe der erfindungsgemäßen gefärbten thermoplastischen Zwischenschicht das Maß der Ausdehnung entlang der Richtung, in der sich die erfindungsgemäße gefärbte thermoplastische Zwischenschicht beispielsweise bei Einbau der Verbundscheibe als Windschutzscheibe in Einbaulage zwischen der Dachkante und der Motorkante erstreckt, zu verstehen. Dementsprechend ist im Sinne der Erfindung unter der Höhe der ersten gefärbten thermoplastischen Schicht, der zweiten thermoplastischen Schicht und der akustisch dämpfenden Schicht auch jeweils das Maß der Ausdehnung in der Richtung zu verstehen, entlang derer sich die jeweilige Schicht bei Einbau der Verbundscheibe als Windschutzscheibe in Einbaulage zwischen der Dachkante und der Motorkante erstreckt.

Die erfindungsgemäße Verbundscheibe kann eine Fahrzeugscheibe sein. Eine Fahrzeugscheibe ist zur Abtrennung eines Fahrzeuginnenraums von einer äußeren Umgebung vorgesehen. Eine Fahrzeugscheibe ist also eine Fensterscheibe, die in eine Fensteröffnung der Fahrzeugkarosserie eingesetzt ist oder dafür vorgesehen ist. Eine erfindungsgemäße Verbundscheibe ist insbesondere eine Windschutzscheibe eines Kraftfahrzeugs.

Die Außenscheibe und die Innenscheibe können unabhängig voneinander klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können beispielsweise aus nicht vorgespanntem, teilvorgespanntem oder vorgespanntem Glas bestehen.

Bei Verbundscheiben, die als Windschutzscheiben vorgesehen sind, ist die Färbung derart ausgebildet, dass die Verbundscheibe im Spektralbereich von 380 nm bis 780 nm eine Lichttransmission von größer 70 % aufweist. Bei Verbundscheiben, die als Dachscheiben oder rückwärtige Seitenscheiben vorgesehen sind, kann die Färbung oder Tönung auch dunkler ausgebildet sein und die Verbundscheiben somit eine Lichttransmission von 70 % oder weniger im Spektralbereich von 380 nm bis 780 nm aufweisen.

Eine erfindungsgemäße Verbundscheibe kann zusätzlich einen Abdeckdruck, insbesondere aus einer dunklen, bevorzugt schwarzen, Emaille umfassen. Bei dem Abdeckdruck handelt es sich insbesondere um einen peripheren, d.h. rahmenartigen, Abdeckdruck. Der periphere Abdeckdruck dient in erster Linie als UV-Schutz für den Montagekleber der Verbundscheibe. Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung. Der Abdeckdruck ist üblicherweise auf der innenraumseitigen Oberfläche der Außenscheibe oder auf der innenraumseitigen Oberfläche der Innenscheibe aufgebracht.

Die erfindungsgemäße Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Die erfindungsgemäße Verbundscheibe kann als Head-Up-Display (HUD) zur Anzeige von Informationen verwendet werden.

Die Erfindung betrifft auch eine Projektionsanordnung für ein Head-Up-Display (HUD) mindestens umfassend eine erfindungsgemäße Verbundscheibe und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die vorstehend beschriebenen bevorzugten Ausgestaltungen der erfindungsgemäßen gefärbten thermoplastischen Zwischenschicht gelten entsprechend auch für die erfindungsgemäße Verbundscheibe umfassend eine erfindungsgemäße gefärbte thermoplastische Zwischenschicht und auch für die Projektionsanordnung umfassend eine erfindungsgemäße Verbundscheibe und einen Projektor.

Die Erfindung betrifft auch ein Verfahren zur Herstellung einer erfindungsgemäßen gefärbten thermoplastischen Zwischenschicht, wobei das Verfahren zumindest den Schritt der Extrusion einer ersten gefärbten thermoplastischen Schicht umfasst.

Somit betrifft die Erfindung auch ein Verfahren zur Herstellung einer erfindungsgemäßen gefärbten thermoplastischen Zwischenschicht mit einer Breite, einer Höhe und einem keilförmigen Querschnitt mit einem dickeren ersten Ende und einem dünneren zweiten Ende, mindestens umfassend eine erste gefärbte thermoplastische Schicht mit einer Breite, einer Höhe und einem keilförmigen Querschnitt mit einem dickeren ersten Ende und einem dünneren zweiten Ende, wobei die Breite und die Höhe der gefärbten thermoplastischen Zwischenschicht der Breite und der Höhe der ersten gefärbten thermoplastischen Schicht entspricht, die erste gefärbte thermoplastische Schicht einen Farbstoff aufweist, die Farbstoffkonzentration in der ersten gefärbten thermoplastischen Schicht von deren dickeren ersten Ende zu deren dünneren zweiten Ende zunimmt, die Lichttransmission durch die erste gefärbte thermoplastische Schicht über deren gesamte Breite und deren gesamte Höhe konstant ist, und die Lichttransmission durch die gefärbte thermoplastische Zwischenschicht über deren gesamte Breite und deren gesamte Höhe konstant ist, wobei das Verfahren zumindest den Schritt der Extrusion der ersten gefärbten thermoplastischen Schicht umfasst.

Die Extrusion erfolgt in der Regel bei Temperaturen zwischen 150 °C und 200 °C.

In einer Ausführungsform umfasst das Verfahren die Extrusion einer ersten gefärbten thermoplastischen Schicht, die Extrusion einer akustisch dämpfenden Schicht und die Extrusion einer zweiten gefärbten thermoplastischen Schicht mittels Co-Extrusion.

Die Schichten werden derart extrudiert, dass die akustisch dämpfende Schicht zwischen der ersten mit einem Farbstoff gefärbten thermoplastischen Schicht und der mit einem Farbstoff zweiten gefärbten thermoplastischen Schicht angeordnet ist. Für diese Ausführungsform des Verfahrens werden zwei Extruder benötigt, ein Extruder für die gefärbte erste thermoplastische Schicht und die gefärbte zweite thermoplastische Schicht und ein Extruder für die akustisch dämpfende Schicht. Die zwei Extruder sind dabei an eine dreischlitzige Düse angeschlossen. Der Farbstoff und seine Konzentration in der mit einem Farbstoff gefärbten ersten thermoplastischen Schicht und der Farbstoff und seine Konzentration in der mit einem Farbstoff gefärbten zweiten thermoplastischen Schicht ist insbesondere derart auszuwählen, dass die resultierende Farbe und die Lichttransmission der gefärbten thermoplastischen Zwischenschicht den jeweiligen gewünschten Anforderungen entspricht.

In einer Ausführungsform dieses Verfahrens ist die akustisch dämpfende Schicht farblos, in einer alternativen Ausführungsform ist die akustisch dämpfende Schicht mit einem Farbstoff gefärbt. In der Ausführungsform, in der die akustisch dämpfende Schicht mit einem Farbstoff gefärbt ist, sind der Farbstoff und seine Konzentration in der mit einem Farbstoff gefärbten akustisch dämpfenden Schicht, der Farbstoff und seine Konzentration in der mit einem Farbstoff gefärbten ersten thermoplastischen Schicht und der Farbstoff und seine Konzentration in der mit einem Farbstoff gefärbten zweiten thermoplastischen Schicht insbesondere derart auszuwählen, dass die resultierende Farbe und die Lichttransmission der gefärbten thermoplastischen Zwischenschicht den jeweiligen gewünschten Anforderungen entspricht.

Das erfindungsgemäße Verfahren umfasst in einer bevorzugten Ausführungsform einen zusätzlichen Schritt, in dem Einsenkungen in mindestens eine der Oberflächen, bevorzugt in beide Oberflächen, der gefärbten thermoplastischen Zwischenschicht geprägt werden. Mittels der geprägten Einsenkungen lässt sich eine Oberflächenrauheit Rz von 10 µm bis 75 µm, bevorzugt von 25 µm bis 75 µm, besonders bevorzugt von 35 µm bis 65 µm, beispielsweise 50 µm erzielen.

Verfahren zur Prägung von Einsenkungen sind beispielweise in den Veröffentlichungen US 5,455,103, US 6,863,956 B1 und US 7,883,761 B2 offenbart.

Alternativ kann eine Oberflächenrauheit Rz von 15 µm bis 45 µm, beispielsweise 30 µm bei der gefärbten thermoplastischen Zwischenschicht auch durch das dem Fachmann bekannte Verfahren des Schmelzenbruchs erzielt werden.

Durch die geprägten Einsenkungen wird eine bessere Entlüftung bei der Lamination von einer Außenscheibe und einer Innenscheibe mittels der gefärbten thermoplastischen Zwischenschicht erzielt.

Die Erfindung betrifft auch ein Verfahren zur Herstellung einer gefärbten Verbundscheibe für ein Head-Up-Display (HUD), wobei die Verbundscheibe eine Außenscheibe, eine Innenscheibe und eine zwischen der Außenscheibe und der Innenscheibe angeordnete gefärbte thermoplastische Zwischenschicht mit einem keilförmigen Querschnitt aufweist und wobei bei dem Verfahren zumindest:
(a) eine Außenscheibe und ein Innenscheibe bereitgestellt wird;
(b) eine erfindungsgemäße gefärbte thermoplastische Zwischenschicht mit einem keilförmigen Querschnitt bereitgestellt wird,
(c) die gefärbte thermoplastische Zwischenschicht flächig zwischen der Außenscheibe und der Innenscheibe angeordnet wird; und
d) die Außenscheibe, die gefärbte thermoplastische Zwischenschicht und die Innenscheibe durch Lamination verbunden werden.

Die Bereitstellung der erfindungsgemäßen gefärbten thermoplastischen Zwischenschicht kann wie oben beschrieben im Extrusionsverfahren erfolgen. Bei der gefärbten thermoplastischen Zwischenschicht handelt es sich um die oben beschriebene erfindungsgemäße gefärbte thermoplastische Zwischenschicht.

Das Verfahren kann zusätzlich die Schritte der Bereitstellung mindestens einer zusätzlichen Zwischenschicht und der Anordnung dieser unabhängig voneinander zwischen der Außenscheibe und der gefärbten thermoplastischen Zwischenschicht oder zwischen der Innenscheibe und der gefärbten thermoplastischen Zwischenschicht umfassen. Die mindestens eine zusätzliche Zwischenschicht weist eine im Wesentlichen konstante Dicke auf. Bei der Bereitstellung einer zusätzlichen Zwischenschicht kann diese somit zwischen der Außenscheibe und der gefärbten thermoplastischen Zwischenschicht oder zwischen der Innenscheibe und der gefärbten thermoplastischen Zwischenschicht angeordnet werden. Bei der Bereitstellung mehr als einer zusätzlichen Zwischenschicht können diese somit entweder zwischen der Außenscheibe und der gefärbten thermoplastischen Zwischenschicht oder zwischen der Innenscheibe und der gefärbten thermoplastischen Zwischenschicht angeordnet werden oder es können sowohl zwischen der Außenscheibe und der thermoplastischen Zwischenschicht als auch zwischen der Innenscheibe und der gefärbten thermoplastischen Zwischenschicht zusätzliche Zwischenschichten angeordnet werden.

Bei der mindestens einen zusätzlichen Zwischenschicht handelt es sich bevorzugt um eine funktionale Zwischenschicht, insbesondere eine IR-reflektierende Schicht, eine UV-Strahlung absorbierende Schicht, eine Barriereschicht, eine Zwischenschicht mit akustisch dämpfenden Eigenschaften oder eine Kombination dieser. Beim Vorhandensein mehrerer zusätzlicher Zwischenschichten können diese auch unterschiedliche Funktionen aufweisen.

Auch in die mindestens zusätzliche Zwischenschicht können in mindestens eine Oberfläche Einsenkungen geprägt werden oder die Rauheit durch Schmelzenbruch erzielt werden.

Soll die Verbundscheibe gebogen sein, so werden die Außenscheibe und die Innenscheibe bevorzugt vor der Lamination einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die vorstehend beschriebenen bevorzugten Ausgestaltungen der erfindungsgemäßen gefärbten thermoplastischen Zwischenschicht oder der erfindungsgemäßen Verbundscheibe gelten entsprechend auch für Verfahren zur Herstellung einer erfindungsgemäßen gefärbten thermoplastischen Zwischenschicht oder zur Herstellung einer erfindungsgemäßen Verbundscheibe.

Die Erfindung betrifft auch die Verwendung einer erfindungsgemäßen gefärbten thermoplastischen Zwischenschicht in einer Verbundscheibe, insbesondere in einer Fahrzeugscheibe in Fortbewegungsmitteln für den Verkehr auf dem Lande, in der Luft oder zu Wasser, insbesondere in Kraftfahrzeugen und ganz besonders in einer Windschutzscheibe in einem Kraftfahrzeug.

Die Erfindung betrifft auch die Verwendung einer erfindungsgemäßen Verbundscheibe als Fahrzeugscheibe in Fortbewegungsmitteln für den Verkehr auf dem Lande, in der Luft oder zu Wasser, insbesondere in Kraftfahrzeugen und insbesondere in einer Windschutzscheibe in einem Kraftfahrzeug.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: den Querschnitt einer Ausführungsform einer erfindungsgemäßen gefärbten thermoplastischen Zwischenschicht;
- Fig. 2: den Querschnitt einer weiteren Ausführungsform einer erfindungsgemäßen gefärbten thermoplastischen Zwischenschicht;
- Fig. 3: den Querschnitt einer weiteren Ausführungsform einer erfindungsgemäßen gefärbten thermoplastischen Zwischenschicht;
- Fig. 4: den Querschnitt einer weiteren Ausführungsform einer erfindungsgemäßen gefärbten thermoplastischen Zwischenschicht;
- Fig. 5: den Querschnitt einer weiteren Ausführungsform einer erfindungsgemäßen gefärbten thermoplastischen Zwischenschicht;
- Fig. 6: den Querschnitt einer Ausführungsform einer erfindungsgemäßen Verbundscheibe;
- Fig. 7: den Querschnitt einer weiteren Ausführungsform einer erfindungsgemäßen Verbundscheibe;
- Fig. 8: den Querschnitt einer Ausführungsform einer erfindungsgemäßen Projektionsanordnung, und
- Fig.9: einen Ausschnitt des in Fig. 1 gezeigten Querschnitts einer Ausführungsform einer erfindungsgemäßen gefärbten thermoplastischen Zwischenschicht.

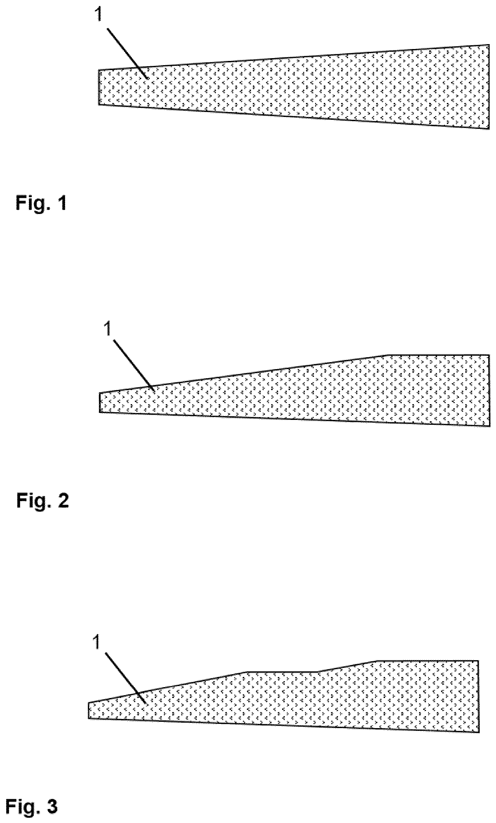

Fig. 1 zeigt den Querschnitt einer Ausführungsform einer erfindungsgemäßen gefärbten thermoplastischen Zwischenschicht 1. Die gefärbte thermoplastische Zwischenschicht 1 weist einen keilförmigen Querschnitt und somit ein dickeres erstes Ende und ein dünneres zweites Ende auf. Der Dickenanstieg von dem zweiten Ende zum ersten Ende der gefärbten thermoplastischen Zwischenschicht 1 ist in der in der Fig. 1 gezeigten Ausführungsform kontinuierlich linear.

In der in der Fig. 1 gezeigten Ausführungsform weist die gefärbte thermoplastische Zwischenschicht 1 einen Keilwinkel von 0,5 mrad auf. Die gefärbte thermoplastische Zwischenschicht 1 ist in der in der Fig. 1 gezeigten Ausführungsform beispielsweise an ihrem dünneren zweiten Ende 0,76 mm dick und an ihrem dickeren ersten Ende 1,26 mm dick. In der Fig. 1 nicht näher spezifiziert, ob die gefärbte thermoplastische Zwischenschicht 1 nur aus einer Folie gebildet ist oder aus mehreren Folien gebildet ist.

Wie oben beschrieben weist eine erfindungsgemäße gefärbte thermoplastische Zwischenschicht 1 eine Breite, eine Höhe und einen keilförmigen Querschnitt auf. In der Fig. 1 ist der Querschnitt entlang der Höhe der erfindungsgemäßen gefärbten thermoplastischen Zwischenschicht 1 dargestellt. Der Abstand zwischen dem dünneren zweiten Ende und dem dickeren ersten Ende der erfindungsgemäßen gefärbten thermoplastischen Zwischenschicht 1 ist die Höhe der erfindungsgemäßen thermoplastischen Zwischenschicht 1.

Die Lichttransmission durch die gefärbte thermoplastische Zwischenschicht 1 ist über deren gesamte Breite und deren gesamte Höhe konstant.

In der Fig. 2 ist eine weitere Ausführungsform einer erfindungsgemäßen gefärbten thermoplastischen Zwischenschicht 1 im Querschnitt dargestellt. Die in der Fig. 2 dargestellte Ausführungsform unterscheidet sich von der in der Fig. 1 dargestellten nur dadurch, dass die gefärbte thermoplastische Zwischenschicht 1 im Querschnitt ein Plateau am dickeren ersten Ende aufweist.

In der Fig. 3 ist eine weitere Ausführungsform einer erfindungsgemäßen gefärbten thermoplastischen Zwischenschicht 1 im Querschnitt dargestellt. Die in der Fig. 3 dargestellte Ausführungsform unterscheidet sich von der in der Fig. 1 dargestellten nur dadurch, dass bei der mehrlagigen gefärbten thermoplastischen Zwischenschicht 1 der Keilwinkel im Verlauf von dem dünneren zweiten Ende zu dem dickeren ersten Ende variiert.

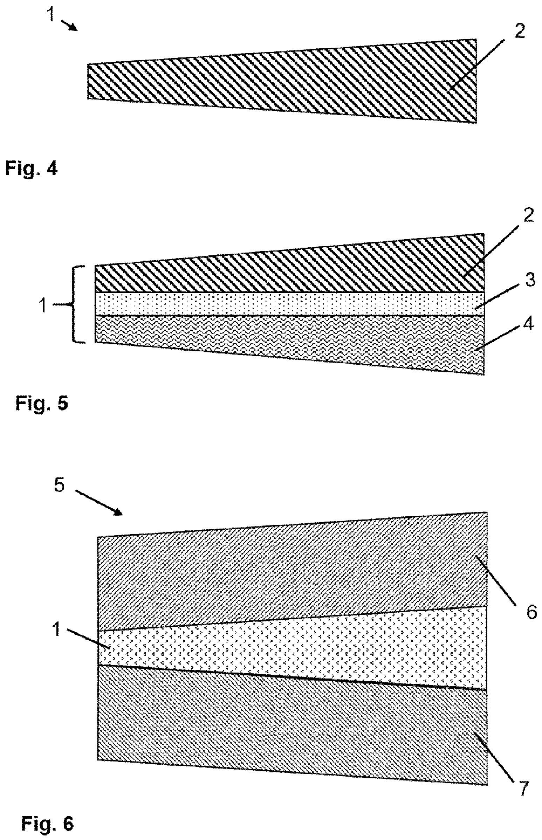

Die Fig. 4 zeigt eine weitere Ausführungsform einer erfindungsgemäßen gefärbten thermoplastischen Zwischenschicht 1. Dabei handelt es sich um eine Ausführungsform der in der Fig. 1 gezeigten gefärbten thermoplastischen Zwischenschicht 1. In dieser Ausführungsform umfasst die gefärbte thermoplastische Zwischenschicht 1 eine erste gefärbte thermoplastische Schicht 2, welche beispielsweise PVB und einen Farbstoff in Form einer organischen Tinte enthält. Die erste gefärbte thermoplastische Schicht 2 und somit die gefärbte thermoplastische Zwischenschicht 1 ist in der in der Fig. 4 gezeigten Ausführungsform beispielsweise grün gefärbt. Es ist aber prinzipiell auch jede andere Farbe möglich, wobei typische Farben für den Automobilmarkt grün, blau und grau sind.

Die Breite und die Höhe der gefärbten thermoplastischen Zwischenschicht 1 entspricht der Breite und der Höhe der ersten gefärbten thermoplastischen Schicht 2. Auch das keilförmige Dickenprofil der gefärbten thermoplastischen Zwischenschicht 1 entspricht dem Dickenprofil der ersten gefärbten thermoplastischen Schicht 2. Die Farbstoffkonzentration in der ersten gefärbten thermoplastischen Schicht 2 nimmt von deren dickeren ersten Ende zu deren dünneren zweiten Ende zu. Die Lichttransmission durch die erste gefärbte thermoplastische Schicht 2 ist über deren gesamte Breite und deren gesamte Höhe konstant, und somit ist auch die Lichttransmission durch die gefärbte thermoplastische Zwischenschicht 1 über deren gesamte Breite und deren gesamte Höhe konstant.

Die Fig. 5 zeigt eine weitere Ausführungsform einer erfindungsgemäßen gefärbten thermoplastischen Zwischenschicht 1. Dabei handelt es sich um eine weitere Ausführungsform der in der Fig. 1 gezeigten gefärbten thermoplastischen Zwischenschicht 1. Diese zeichnet sich dadurch aus, dass die gefärbte thermoplastische Zwischenschicht 1 neben einer ersten gefärbten thermoplastischen Schicht 2 eine zweite gefärbte thermoplastische Schicht 4 sowie eine akustisch dämpfende Schicht 3 umfasst, wobei die akustisch dämpfende Schicht 3 zwischen der ersten gefärbten thermoplastischen Schicht 2 und der zweiten gefärbten thermoplastischen Schicht 4 angeordnet ist. Die erste gefärbte thermoplastische Schicht 2 und die zweite gefärbte thermoplastische Schicht 4 weisen jeweils einen keilförmigen Querschnitt und somit ein dickeres erstes Ende und ein dünneres zweites Ende auf und sind am dünneren zweiten Ende beispielsweise jeweils 0,33 mm dick und weisen einen Keilwinkel von jeweils 0,25 mrad auf. Die akustisch dämpfende Schicht 3 weist keinen Keilwinkel und eine konstante Dicke von beispielsweise 100 µm auf. Die akustisch dämpfende Schicht 3 ist in der in der Fig. 5 gezeigten Ausführungsform farblos, sie kann alternativ aber auch gefärbt sein. In der in der Fig. 5 gezeigten Ausführungsform enthalten die erste gefärbte thermoplastische Schicht 2 und die zweite gefärbte thermoplastische Schicht 4 beispielsweise PVB und einen Farbstoff in Form anorganischer Pigmente. Die erste gefärbte thermoplastische Schicht 2 und die zweite gefärbte thermoplastischen Schicht 4 und somit die gefärbte thermoplastische Zwischenschicht 1 ist in der in der Fig. 5 gezeigten Ausführungsform beispielsweise grau gefärbt. Es ist aber prinzipiell auch jede andere Farbe möglich, wobei typische Farben für den Automobilmarkt grün, blau und grau sind.

Die erste gefärbte thermoplastische Schicht 2, die zweite gefärbte thermoplastische Schicht 4 und die dazwischenliegende akustisch dämpfende Schicht 3 sind vollflächig übereinander angeordnet und weisen dieselbe Breite und Höhe auf. Die Dicke der in der Fig. 5 im Querschnitt gezeigten erfindungsgemäßen gefärbten thermoplastischen Zwischenschicht 1 ist aufgrund des keilförmigen Querschnitts der gefärbten thermoplastischen Zwischenschicht 1 nicht konstant und entspricht jeweils der Summe der Dicken der ersten gefärbten thermoplastischen Schicht 2, der zweiten gefärbten thermoplastischen Schicht 4 und der dazwischenliegenden akustisch dämpfenden Schicht 3.

Die Farbstoffkonzentration in der ersten gefärbten thermoplastischen Schicht 2 nimmt von deren dickeren ersten Ende zu deren dünneren zweiten Ende zu. Die Farbstoffkonzentration in der zweiten gefärbten thermoplastischen Schicht 4 nimmt ebenfalls von deren dickeren ersten Ende zu deren dünneren zweiten Ende zu. Die Lichttransmission durch die erste gefärbte thermoplastische Schicht 2 ist über deren gesamte Breite und deren gesamte Höhe konstant, die Lichttransmission durch die zweite gefärbte thermoplastische Schicht 4 ist ebenfalls über deren gesamte Breite und deren gesamte Höhe konstant und somit ist auch die Lichttransmission durch die gefärbte thermoplastische Zwischenschicht 1 über deren gesamte Breite und deren gesamte Höhe konstant.

Fig. 6 zeigt den Querschnitt einer Ausführungsform einer erfindungsgemäßen Verbundscheibe 5. Diese umfasst eine Außenscheibe 6 und eine Innenscheibe 7, die über eine erfindungsgemäße gefärbte thermoplastische Zwischenschicht 1 miteinander verbunden sind. Die gefärbte thermoplastische Zwischenschicht 1 kann beispielsweise wie in den Fig. 4 und 5 aufgebaut sein. In der in der Fig. 6 gezeigten Ausführungsform bestehen die Außenscheibe 6 und die Innenscheibe 7 beispielsweise aus Kalk-Natron-Glas und weisen eine Dicke von jeweils 2,1 mm auf. Es ist aber auch möglich, dass die Außenscheibe 6 und die Innenscheibe 7 unterschiedliche Dicken aufweisen. Die Außenscheibe 6 und die Innenscheibe 7 weisen in der in der Fig. 6 gezeigten Ausführungsform keinen Keilwinkel auf. Es ist aber auch möglich, dass die Außenscheibe 6 und/oder die Innenscheibe 7 einen Keilwinkel aufweisen, d.h. einen keilförmigen Querschnitt aufweisen.

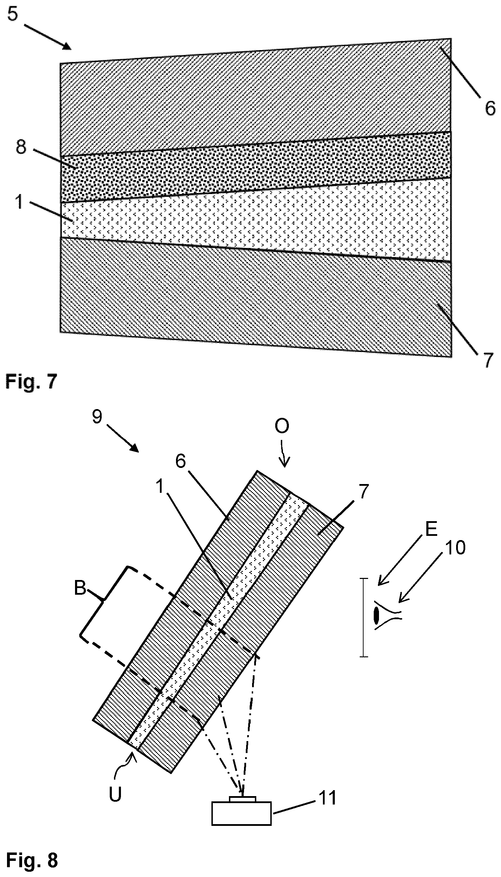

Fig. 7 zeigt den Querschnitt einer weiteren Ausführungsform einer erfindungsgemäßen Verbundscheibe 5. Die in der Fig. 7 im Querschnitt gezeigte Ausführungsform einer erfindungsgemäßen Verbundscheibe 5 unterscheidet sich von der in der Fig. 6 gezeigten Ausführungsform nur dahingehend, dass die Verbundscheibe 5 eine zusätzliche Zwischenschicht 8 aufweist, die zwischen der Außenscheibe 6 und der gefärbten thermoplastischen Zwischenschicht 1 angeordnet ist.

Es versteht sich, dass die zusätzliche Zwischenschicht 8 alternativ auch zwischen der Innenscheibe 7 und der gefärbten thermoplastischen Zwischenschicht 1 angeordnet sein kann oder bei Vorhandensein von mindestens zwei zusätzlichen Zwischenschichten 8 auch mindestens eine zwischen der Außenscheibe 6 und der gefärbten thermoplastischen Zwischenschicht 1 und mindestens eine zwischen der Innenscheibe 7 und der gefärbten thermoplastischen Zwischenschicht 1 angeordnet sein kann.

In der in der Fig. 7 gezeigten Ausführungsform handelt es sich bei der zusätzlichen Zwischenschicht 8 beispielsweise um eine Infrarotstrahlung reflektierende Schicht mit einer konstanten Dicke von 0,38 mm.

In der Fig. 8 ist der Querschnitt einer erfindungsgemäßen Projektionsanordnung 9 gezeigt. Die Projektionsanordnung 9 umfasst eine Verbundscheibe 5, insbesondere die Windschutzscheibe eines Personenkraftwagens, mit einer Oberkante O und einer Unterkante U und zwei in der Fig. 8 nicht dargestellten Seitenkanten. Bei der in der Fig. 8 dargestellten Projektionsanordnung 9 entspricht die Verbundscheibe 5 der in der Fig. 6 dargestellten Verbundscheibe 5. Die Projektionsanordnung 9 umfasst außerdem einen Projektor 11, welcher auf einen Bereich B der Verbundscheibe 5 gerichtet ist. In dem Bereich B, der üblicherweise als HUD-Bereich bezeichnet wird, können durch den Projektor 11 Bilder erzeugt werden, welche von einem Betrachter 10 (Fahrzeugfahrer) als virtuelle Bilder auf der von ihm abgewandten Seite der Verbundscheibe 5 wahrgenommen werden, wenn sich seine Augen innerhalb der sogenannten Eyebox E befinden.

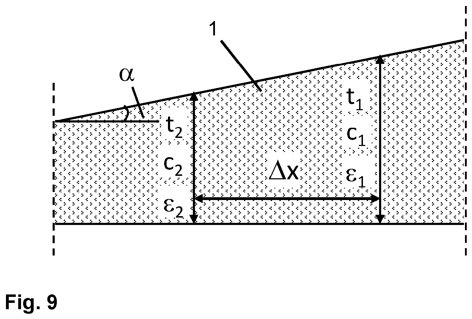

Fig.9 zeigt einen Ausschnitt des in Fig. 1 gezeigten Querschnitts einer Ausführungsform einer erfindungsgemäßen gefärbten thermoplastischen Zwischenschicht 1. In diesem Ausschnitt sind die Messpunkte eingezeichnet, die für die nachfolgende Formel benötigt werden, um das Verhältnis der Farbstoffkonzentrationen an Positionen in der Schicht mit unterschiedlicher Dicke zu berechnen, das benötigt wird, um eine konstante Lichttransmission an beiden Positionen zu erzielen: $\frac{{c}_{1}}{{c}_{2}} = \left(1-\frac{Δ x}{{t}_{1}}⋅tanα\right) ⋅ \frac{{ε}_{2}}{{ε}_{1}}$

Mit:
t₁: Dicke an Position 1
t₂: Dicke an Position 2
c₁: Konzentration an Position 1
c₂: Konzentration an Position 2
ε₁: Extinktionskoeffizient an Position 1
ε₂: Extinktionskoeffizient an Position 2
α: Keilwinkel
Δx: Abstand zwischen Position 1 und Position 2

### Bezugszeichenliste:

- 1: gefärbte thermoplastische Zwischenschicht
- 2: erste gefärbte thermoplastische Schicht
- 3: akustisch dämpfende Schicht
- 4: zweite gefärbte thermoplastische Schicht
- 5: Verbundscheibe
- 6: Außenscheibe
- 7: Innenscheibe
- 8: zusätzliche Zwischenschicht
- 9: Projektionsanordnung
- 10: Betrachter, Fahrzeugfahrer
- 11: Projektor

- B: HUD-Bereich der Verbundscheibe 5
- E: Eyebox, Eyeboxfenster

- O: oberer Scheibenrand / Oberkante / Dachkante der Verbundscheibe
- U: unterer Scheibenrand / Unterkante / Motorkante der Verbundscheibe

- t₁: Dicke an Position 1
- t₂: Dicke an Position 2
- c₁: Konzentration an Position 1
- c₂: Konzentration an Position 2
- ε₁: Extinktionskoeffizient an Position 1
- ε₂: Extinktionskoeffizient an Position 2
- α: Keilwinkel
- Δx: Abstand zwischen Position 1 und Position 2

## Patentansprüche

1. Gefärbte thermoplastische Zwischenschicht (1) mit einer Breite, einer Höhe und einem keilförmigen Querschnitt mit einem dickeren ersten Ende und einem dünneren zweiten Ende, mindestens umfassend eine erste gefärbte thermoplastische Schicht (2) mit einer Breite, einer Höhe und einem keilförmigen Querschnitt mit einem dickeren ersten Ende und einem dünneren zweiten Ende,
wobei
die Breite und die Höhe der gefärbten thermoplastischen Zwischenschicht (1) der Breite und der Höhe der ersten gefärbten thermoplastischen Schicht (2) entspricht,
die erste gefärbte thermoplastische Schicht (2) einen Farbstoff aufweist,
die Farbstoffkonzentration in der ersten gefärbten thermoplastischen Schicht (2) von deren dickeren ersten Ende zu deren dünneren zweiten Ende zunimmt,
die Lichttransmission durch die erste gefärbte thermoplastische Schicht (2) über deren gesamte Breite und deren gesamte Höhe konstant ist, und
die Lichttransmission durch die gefärbte thermoplastische Zwischenschicht (1) über deren gesamte Breite und deren gesamte Höhe konstant ist.

2. Gefärbte thermoplastische Zwischenschicht (1) nach Anspruch 1, wobei die gefärbte thermoplastische Zwischenschicht (1) einen Keilwinkel im Bereich von 0,1 mrad bis 1,0 mrad, bevorzugt 0,3 mrad bis 0,6 mrad aufweist.

3. Gefärbte thermoplastische Zwischenschicht (1) nach Anspruch 1 oder 2, wobei die erste gefärbte thermoplastische Schicht (2) einen Farbstoff und zumindest Polyvinylbutyral (PVB), Ethylenvinylacetat (EVA), Polyurethan (PU) oder Gemische oder Copolymere oder Derivate davon, bevorzugt Polyvinylbutyral (PVB), besonders bevorzugt Polyvinylbutyral (PVB) und Weichmacher, enthält.

4. Gefärbte thermoplastische Zwischenschicht (1) nach einem der Ansprüche 1 bis 3, wobei die Farbe der gefärbten thermoplastischen Zwischenschicht (1) gemessen über die Koordinaten L*, a* und B* gemäß CIELab über deren Breite und Höhe im Wesentlichen konstant ist.

5. Gefärbte thermoplastische Zwischenschicht (1) nach einem der Ansprüche 1 bis 4, zusätzlich umfassend
- eine akustisch dämpfende Schicht (3) mit im Wesentlichen konstanter Dicke und einer Breite und einer Höhe, und
- eine zweite gefärbte thermoplastische Schicht (4) mit einer Breite, einer Höhe und einem keilförmigen Querschnitt mit einem dickeren ersten Ende und einem dünneren zweiten Ende,
wobei
die Breite und die Höhe der akustisch dämpfenden Schicht (3) und die Breite und die Höhe der zweiten gefärbten thermoplastischen Schicht (4) der Breite und der Höhe der gefärbten thermoplastischen Zwischenschicht (1) und der Breite und der Höhe der ersten gefärbten thermoplastischen Schicht (2) entsprechen,
die akustisch dämpfende Schicht (3) zwischen der ersten gefärbten thermoplastischen Schicht (2) und der zweiten gefärbten thermoplastischen Schicht (4) flächig angeordnet ist und farblos oder mit einem Farbstoff gefärbt ist,
die zweite gefärbte thermoplastische Schicht (4) einen Farbstoff aufweist,
die Farbstoffkonzentration in der zweiten gefärbten thermoplastischen Schicht (4) von deren dickeren ersten Ende zu deren dünneren zweiten Ende zunimmt, und
die Lichttransmission durch die zweite gefärbte thermoplastische Schicht (4) über deren gesamte Breite und deren gesamte Höhe konstant ist.

6. Gefärbte thermoplastische Zwischenschicht (1) nach Anspruch 5, wobei die akustisch dämpfende Schicht (3) farblos ist.

7. Gefärbte thermoplastische Zwischenschicht (1) nach Anspruch 5, wobei die akustisch dämpfende Schicht (3) mit einem Farbstoff gefärbt ist.

8. Verbundscheibe (5), mindestens umfassend eine Außenscheibe (6), eine Innenscheibe (7) und eine zwischen der Außenscheibe (6) und der Innenscheibe (7) angeordnete gefärbte thermoplastische Zwischenschicht (1) nach einem der Ansprüche 1 bis 7.

9. Verbundscheibe (5) nach Anspruch 8, zusätzlich umfassend mindestens eine zusätzliche Zwischenschicht (8), die zwischen der Außenscheibe (6) und der gefärbten thermoplastischen Zwischenschicht (1) oder zwischen der Innenscheibe (7) und der gefärbten thermoplastischen Zwischenschicht (1) angeordnet ist und eine im Wesentlichen konstante Dicke aufweist, insbesondere eine Infrarotstrahlung absorbierende Schicht, eine Infrarotstrahlung reflektierende Schicht, eine UV-Strahlung absorbierende Schicht, eine Barriereschicht, eine Zwischenschicht mit akustisch dämpfenden Eigenschaften oder eine Kombination dieser.

10. Verbundscheibe (5) nach Anspruch 8 oder 9, wobei die Außenscheibe (6) und/oder die Innenscheibe (7) Antireflexbeschichtungen, Antihaftbeschichtungen, Antikratzbeschichtungen, photokatalytische Beschichtungen, elektrisch heizbare Beschichtungen, Sonnenschutzbeschichtungen und/oder Low-E-Beschichtungen aufweist.

11. Verbundscheibe (5) nach einem der Ansprüche 8 bis 10, wobei die Verbundscheibe (5) eine Fahrzeugscheibe, insbesondere eine Windschutzscheibe für ein Kraftfahrzeug ist.

12. Projektionsanordnung (9) für ein Head-Up Display (HUD) zur Darstellung von Informationen für einen Betrachter (10) in einem HUD-Bereich (B), mindestens umfassend:
- eine Verbundscheibe (5) nach einem der Ansprüche 8 bis 11, und
- einen Projektor (11), der auf den HUD-Bereich (B) gerichtet ist.

13. Verfahren zur Herstellung einer gefärbten thermoplastischen Zwischenschicht (1) nach einem der Ansprüche 1 bis 7, mindestens umfassend die Extrusion einer ersten gefärbten thermoplastischen Schicht (2).

14. Verfahren nach Anspruch 13 zur Herstellung einer gefärbten thermoplastischen Zwischenschicht (1) nach einem der Ansprüche 5 bis 7, umfassend die Extrusion einer ersten gefärbten thermoplastischen Schicht (2), die Extrusion einer akustisch dämpfenden Schicht (3) und die Extrusion einer zweiten gefärbten thermoplastischen Schicht (4) mittels Co-Extrusion.

15. Verwendung der gefärbten thermoplastischen Zwischenschicht (1) nach einem der Ansprüche 1 bis 7 in einer Fahrzeugscheibe in Fortbewegungsmitteln für den Verkehr auf dem Land, in der Luft oder zu Wasser, insbesondere in Kraftfahrzeugen und insbesondere in einer Windschutzscheibe, die als Projektionsfläche einer Projektionsanordnung für ein Head-Up-Display dient.

## Claims

1. Colored thermoplastic intermediate layer (1) which comprises a width, a height and a wedge-shaped cross section having a thicker first end and a thinner second end, and which at least comprises a first colored thermoplastic layer (2) comprising a width, a height and a wedge-shaped cross section having a thicker first end and a thinner second end,
wherein
the width and the height of the colored thermoplastic intermediate layer (1) correspond to the width and the height of the first colored thermoplastic layer (2), the first colored thermoplastic layer (2) comprises a colorant,
the colorant concentration in the first colored thermoplastic layer (2) increases from the thicker first end thereof to the thinner second end thereof,
the light transmission through the first colored thermoplastic layer (2) is constant across the entire width thereof and the entire height thereof, and
the light transmission through the colored thermoplastic intermediate layer (1) is constant across the entire width thereof and the entire height thereof.

2. Colored thermoplastic intermediate layer (1) according to claim 1, wherein the colored thermoplastic intermediate layer (1) has a wedge angle in the range from 0.1 mrad to 1.0 mrad, preferably 0.3 mrad to 0.6 mrad.

3. Colored thermoplastic intermediate layer (1) according to claim 1 or 2, wherein the first colored thermoplastic layer (2) contains a colorant and at least polyvinyl butyral (PVB), ethylene-vinyl acetate (EVA), polyurethane (PU) or mixtures or copolymers or derivatives thereof, preferably polyvinyl butyral (PVB), particularly preferably polyvinyl butyral (PVB) and plasticisers.

4. Colored thermoplastic intermediate layer (1) according to any of claims 1 to 3, wherein the color of the colored thermoplastic intermediate layer (1), measured using the coordinates L*, a* and b* according to CIELab, is substantially constant over the width and height of the colored thermoplastic intermediate layer (1).

5. Colored thermoplastic intermediate layer (1) according to any of claims 1 to 4, further comprising
- an acoustically damping layer (3) having substantially constant thickness and a width and a height, and
- a second colored thermoplastic layer (4) having a width, a height and a wedge-shaped cross section having a thicker first end and a thinner second end,
wherein
the width and the height of the acoustically damping layer (3) and the width and the height of the second colored thermoplastic layer (4) correspond to the width and the height of the colored thermoplastic intermediate layer (1) and to the width and the height of the first colored thermoplastic layer (2),
the acoustically damping layer (3) is arranged in a planar manner between the first colored thermoplastic layer (2) and the second colored thermoplastic layer (4) and is colorless or colored by means of a colorant,
the second colored thermoplastic layer (4) has a colorant,
the colorant concentration in the second colored thermoplastic layer (4) increases from the thicker first end thereof to the thinner second end thereof, and
the light transmission through the second colored thermoplastic layer (4) is constant across the entire width thereof and the entire height thereof.

6. Colored thermoplastic intermediate layer (1) according to claim 5, wherein the acoustically damping layer (3) is colorless.

7. Colored thermoplastic intermediate layer (1) according to claim 5, wherein the acoustically damping layer (3) is colored by means of a colorant.

8. Laminated pane (5) at least comprising an outer pane (6), an inner pane (7), and a colored thermoplastic intermediate layer (1) according to any of claims 1 to 7, arranged between the outer pane (6) and the inner pane (7).

9. Laminated pane (5) according to claim 8, further comprising at least a further intermediate layer (8) which is arranged between the outer pane (6) and the colored thermoplastic intermediate layer (1) or between the inner pane (7) and the colored thermoplastic intermediate layer (1) and which has a substantially constant thickness, in particular a layer which absorbs infrared radiation, a layer which reflects infrared radiation, a layer which absorbs UV radiation, a barrier layer, an intermediate layer having acoustically damping properties, or a combination thereof.

10. Laminated pane (5) according to claim 8 or 9, wherein the outer pane (6) and/or the inner pane (7) has anti-reflection coatings, anti-stick coatings, anti-scratch coatings, photocatalytic coatings, electrically heatable coatings, solar protection coatings and/or low-E coatings.

11. Laminated pane (5) according to any of claims 8 to 10, wherein the laminated pane (5) is a vehicle pane, in particular a windshield for a motor vehicle.

12. Projection arrangement (9) for a head-up display (HUD) for presenting, in an HUD region (B), information to a viewer (10), which projection arrangement at least comprises:
- a laminated pane (5) according to any of claims 8 to 11, and
- a projector (11) which is directed toward the HUD region (B).

13. Method for producing a colored thermoplastic intermediate layer (1) according to any of claims 1 to 7, at least comprising extruding a first colored thermoplastic layer (2).

14. Method according to claim 13 for producing a colored thermoplastic intermediate layer (1) according to any of claims 5 to 7, comprising extruding a first colored thermoplastic layer (2), extruding an acoustically damping layer (3) and extruding a second colored thermoplastic layer (4) by means of co-extrusion.

15. Use of the colored thermoplastic intermediate layer (1) according to any of claims 1 to 7 in a vehicle pane in means of transport for traffic on land, in the air or on water, in particular in motor vehicles and in particular in a windshield which is used as a projection surface of a projection arrangement for a head-up display.

## Revendications

1. Couche intermédiaire thermoplastique colorée (1) comportant une largeur, une hauteur et une section transversale cunéiforme comportant une première extrémité plus épaisse et une seconde extrémité plus fine, comprenant au moins une première couche thermoplastique colorée (2) comportant une largeur, une hauteur et une section transversale cunéiforme comportant une première extrémité plus épaisse et une seconde extrémité plus fine,
dans laquelle
la largeur et la hauteur de la couche intermédiaire thermoplastique colorée (1) correspondent à la largeur et à la hauteur de la première couche thermoplastique colorée (2), la première couche thermoplastique colorée (2) présente un colorant,
la concentration en colorant dans la première couche thermoplastique colorée (2) va en augmentant de sa première extrémité plus épaisse vers sa seconde extrémité plus fine,
la transmission lumineuse à travers la première couche thermoplastique colorée (2) est constante sur toute sa largeur et sur toute sa hauteur, et
la transmission lumineuse à travers la couche intermédiaire thermoplastique colorée (1) est constante sur toute sa largeur et sur toute sa hauteur.

2. Couche intermédiaire thermoplastique colorée (1) selon la revendication 1, dans laquelle la couche intermédiaire thermoplastique colorée (1) présente un angle de coin comprise dans la plage allant de 0,1 mrad à 1,0 mrad, de préférence de 0,3 mrad à 0,6 mrad.

3. Couche intermédiaire thermoplastique colorée (1) selon la revendication 1 ou 2, dans laquelle la première couche thermoplastique colorée (2) contient un colorant et au moins du polybutyral de vinyle (PVB), de l'éthylène-acétate de vinyle (EVA), du polyuréthane (PU) ou des mélanges, copolymères ou dérivés de ceux-ci, de préférence du polybutyral de vinyle (PVB), et de manière particulièrement préférée du polybutyral de vinyle (PVB) et un plastifiant.

4. Couche intermédiaire thermoplastique colorée (1) selon l'une des revendications 1 à 3, dans laquelle la couleur de la couche intermédiaire thermoplastique colorée (1), mesurée par l'intermédiaire des coordonnées L*, a* et B* selon la norme CIELab, est sensiblement constante sur sa largeur et sa hauteur.

5. Couche intermédiaire thermoplastique colorée (1) selon l'une des revendications 1 à 4, comprenant en outre
- une couche d'insonorisation acoustique (3) comportant une épaisseur sensiblement constante, une largeur et une hauteur, et
- une seconde couche thermoplastique colorée (4) comportant une largeur, une hauteur et une section transversale cunéiforme comportant une première extrémité plus épaisse et une seconde extrémité plus fine, dans laquelle
la largeur et la hauteur de la couche d'insonorisation acoustique (3) et la largeur et la hauteur de la seconde couche thermoplastique colorée (4) correspondent à la largeur et à la hauteur de la couche intermédiaire thermoplastique colorée (1) et à la largeur et à la hauteur de la première couche thermoplastique colorée (2),
la couche d'insonorisation acoustique (3) est disposée sur toute la surface entre la première couche thermoplastique colorée (2) et la seconde couche thermoplastique colorée (4) et est incolore ou colorée avec un colorant, la seconde couche thermoplastique colorée (4) présente un colorant,
la concentration en colorant dans la seconde couche thermoplastique colorée (4) va en augmentant de sa première extrémité plus épaisse vers sa seconde extrémité plus fine, et
la transmission lumineuse à travers la seconde couche thermoplastique colorée (4) est constante sur toute sa largeur et sur toute sa hauteur.

6. Couche intermédiaire thermoplastique colorée (1) selon la revendication 5, dans laquelle la couche d'insonorisation acoustique (3) est incolore.

7. Couche intermédiaire thermoplastique colorée (1) selon la revendication 5, dans laquelle la couche d'insonorisation acoustique (3) est colorée avec un colorant.

8. Vitrage feuilleté (5), comprenant au moins une vitre externe (6), une vitre interne (7) et une couche intermédiaire thermoplastique colorée (1), selon l'une des revendications 1 à 7, disposée entre la vitre externe (6) et la vitre interne (7).

9. Vitrage feuilleté (5) selon la revendication 8, comprenant en outre au moins une couche intermédiaire supplémentaire (8), laquelle est disposée entre la vitre externe (6) et la couche intermédiaire thermoplastique colorée (1) ou entre la vitre interne (7) et la couche intermédiaire thermoplastique colorée (1) et présente une épaisseur sensiblement constante, en particulier une couche absorbant le rayonnement infrarouge, une couche réfléchissant le rayonnement infrarouge, une couche absorbant le rayonnement UV, une couche barrière, une couche intermédiaire comportant des propriétés d'insonorisation acoustique ou une combinaison de celles-ci.

10. Vitrage feuilleté (5) selon la revendication 8 ou 9, dans lequel la vitre externe (6) et/ou la vitre interne (7) présentent des revêtements antireflets, des revêtements antiadhésifs, des revêtements antirayures, des revêtements photocatalytiques, des revêtements pouvant être chauffés électriquement, des revêtements de protection solaire et/ou des revêtements à faible émissivité (Low-E).

11. Vitrage feuilleté (5) selon l'une des revendications 8 à 10, dans lequel le vitrage feuilleté (5) est une vitre de véhicule, en particulier un pare-brise pour un véhicule automobile.

12. Agencement de projection (9) pour un affichage tête haute (HUD) permettant l'affichage d'informations à l'intention d'un observateur (10) dans une zone HUD (B), comprenant au moins :
- un vitrage feuilleté (5) selon l'une des revendications 8 à 11, et
- un projecteur (11) dirigé vers la zone HUD (B).

13. Procédé de fabrication d'une couche intermédiaire thermoplastique colorée (1) selon l'une des revendications 1 à 7, comprenant au moins l'extrusion d'une première couche thermoplastique colorée (2).

14. Procédé selon la revendication 13 pour la fabrication d'une couche intermédiaire thermoplastique colorée (1) selon l'une des revendications 5 à 7, comprenant l'extrusion d'une première couche thermoplastique colorée (2), l'extrusion d'une couche d'insonorisation acoustique (3) et l'extrusion d'une seconde couche thermoplastique colorée (4) au moyen d'une coextrusion.

15. Utilisation de la couche intermédiaire thermoplastique colorée (1) selon l'une des revendications 1 à 7 dans une vitre de véhicule dans des moyens de locomotion pour la circulation terrestre, aérienne ou maritime, en particulier dans des véhicules automobiles et en particulier dans un pare-brise servant de surface de projection d'un agencement de projection pour un affichage tête haute.
